# EUROPEAN PATENT SPECIFICATION

(11) **EP 0 414 414 B1**
(45) Date of publication and mention of the grant of the patent: **19.07.1995**
(21) Application number: 90308708.8
(22) Date of filing: 08.08.1990
(51) Int. Cl.: B29C 61/10, B29C 65/02, B29C 65/20

(54) **Heat shrinkable protective sheets and methods for their manufacture**
Wärmeschrumpfbare Schutzfolien und Verfahren zu ihrer Herstellung
Feuilles protectrices thermorétractables et leurs procédés de fabrication

(30) Priority: 10.08.1989 US 392043; 07.05.1990 US 519473
(43) Date of publication of application: 27.02.1991
(73) Proprietor: SHAW INDUSTRIES LTD., Rexdale Ontario M9W 1M7 (CA)
(72) Inventor: Smythe, James L., Ontario, P0A 1J0 (CA); Yawney, Brian W., Mississauga, Ontario L5G 2M1 (CA); Oliver, John H., Huntsville, Ontario P0A 1K0 (CA); Jackson, Peter, Etobicoke, Ontario M8W 1E3 (CA)
(74) Representative: Smith, Norman Ian

(56) References cited:
- EP-A- 0 143 457
- WO-A-82/02412
- DE-A- 3 640 187
- GB-A- 866 063
- GB-A- 2 082 500
- US-A- 4 200 676
- US-A- 4 378 393
- US-A- 4 472 468

## Description

The present invention relates to heat shrinkable protective sheets useful as protective coverings which may be used in, for example, sealing and protecting pipe weld joints, telephone cables, electrical splices, pipelines and the like, from adverse environmental conditions such as corrosion and moisture.

It is known to use for this purpose heat shrinkable tubular sleeves formed by extrusion. However, there is difficulty in extruding sleeves of any diameter but especially greater than about 12 inches (about 30 cm). The procedures for imparting a heat shrink memory to and for stretching the sleeves are complex and difficult as well.

Another general type of heat shrinkable covering is represented by the so-called "wrap-around sleeve", one example of which is disclosed in U.S. Pat. No. 4,200,676 to D.A. Caponigro. While wrap-around sleeves are more versatile than tubular sleeves in that they can be readily applied to articles, including large diameter pipes, which do not have an accessible exposed end, the closure systems by which the adjoining ends of the sleeve are interconnected are an inherent source of weakness. Mechanical closure systems are especially vulnerable to damage, while conventionally bonded overlaps can permit slippage during application and subsequently creep due to the hoop stresses remaining in the shrunk sleeves and so render the sleeves less effective than those which have a continuous covering.

US-4378393 describes a heat shrinkable sleeve in which the opposite end portions which are overlapped are non-heat shrinkable The are secured by heat sensitive adhesive.

These problems have been largely overcome by the method described in U.S. patent 4,472,468 in the name Tailor et al dated September 18, 1984, wherein a hold-down adhesive is used to bond together overlapped end portions of a heat shrinkable sheet before applying heat externally by means of a torch in order to weld the sheets together. The application of a hold-down adhesive to the sheet material is not always convenient or desirable, however.

The present invention provides a wrap-around sleeve in the form of a sheet of dimensionally heat unstable flexible material, on one end portion of which a dimensionally substantially heat stable closure strip is welded through a uniform and preferably homogeneous welded bond. In use, the sheet is wrapped around the article to be protected with the end portion having the closure strip overlapped on the opposite end portion. Direct heating can then be applied to weld the free edge of the dimensionally heat stable strip to the underlapping end portion. Heating of the welded sleeve thus formed can then be applied in any conventional manner in order to shrink the sleeve down to form a protective tightly wrapping covering around the article.

With prior attempts of which the inventors are aware, wherein two dimensionally heat unstable edges or pieces are welded together, problems have arisen in effecting a satisfactory weld.

One of the problems is that of peel back which occurs when two overlapping heat shrinkable sheets are heated. When heat is applied, the outside surface of the overlap tends to recover or shrink before the inside surface and thus there is differential contraction across the thickness of the sheets between the overlap and underlap. These problems are greatly mitigated with the structure of the invention, wherein only one of edges welded together is a heat shrinkable or otherwise dimensionally unstable material. As a result, it is possible to obtain welded bonds which are uniform and preferably homogeneous. By "uniform" is meant that the weld is of substantially uniform peel strength along its entire length. By "homogeneous" is meant that the area or line of welding between the heat stable strip and heat unstable sheet does not present a line of weakness, so that when subjected to peel strength testing the welded joint does not fail along an interface corresponding to the boundaries of the original strip and sheet.

The protective wrap-around sleeve of the present invention is manufactured by welding the substantially heat stable closure strip on the dimensionally heat unstable flexible material, and a number of welding techniques may be employed. For example, the welding may be achieved by direct heating of the upper surface of the closure strip, while applying pressure to the assembly of the closure strip and the heat unstable material. For example, the assembly may be pressed between platens, the platen in contact with closure strip being electrically resistively heated. In this case it is necessary to heat the closure strip sufficiently so that its inner surface, in contact with the heat unstable material, is fused to the adjacent surface of the heat unstable material.

In the preferred form, and with considerably greater advantage, the protective wrap-around sleeve is manufactured by drawing the heat stable strip and heat unstable sheet over opposite sides of a heated member, the heating of which is controlled, in order to melt surface portions of the strip and the sheet, and then bringing the melted surface portions into contact. By carefully controlling the heating of the heated member, it is possible to melt only a thin skin portion of the strip or sheet in contact with the heated member. Surprisingly, it has been found that this welding method allows a satisfactory uniform and preferably homogeneous weld to be achieved between materials one or both of which are dimensionally heat unstable, without problems such as peel back or puckering of the welded portions occurring. It is believed that by heating and melting only a thin skin portion of the materials undergoing welding, this welding method does not heat the materials throughout their thickness sufficiently to cause their strengths to be impaired. As well, the weld is not substantially affected by forces of differential expansion or contraction between the two sheet materials which, in conventional methods of welding dimensionally heat unstable materials, result in the problems of peel back or puckering of the weld noted above.

The sleeve can be formed by a method in which the edges of sheet material are welded together to form a heat shrinkable protective covering, at least one of said edges constituting an end portion of a dimensionally heat unstable sheet material having been stretched in the longitudinal direction from an original heat stable form to a dimensionally heat unstable form capable of shrinking toward its original form by the application of heat alone, comprising drawing said edges over opposite sides of a heated member, controlling the heating of the member so that a thin skin portion of each opposing inner sides of each edge adjacent the heated member is melted, bringing the melted portions of the edges into contact and applying pressure to the edges to cause them to fuse together.

In the preferred form, this welding method is conducted using heated wedge welding apparatus, wherein the heated member is in the form of a wedge, which apparatus is in itself known and was used before the present invention for welding together fabric-reinforced polymer films or sheets, or other dimensionally heat stable films or sheets, for example in the manufacture of waterproof clothing.

Such welding apparatus and its use is described in a number of prior patents:
U.S. Patents:
2,387,556 3,322,593
3,607,544 4,146,419
4,605,578 4,737,212
and 4,744,855
as well as in published U.K. patent application 2,082,500A dated March 10, 1982 in the name Gundle Holdings, and reference may be made to them for further details.

In the most preferred form, the heated wedge is equipped with thermistor controlled heating. This allows very accurate control over and precise maintenance of the temperature of the wedge, thus allowing close control of the thickness of the melted skin on the surface of the materials undergoing welding.

When producing the heat shrinkable wrap-around protective sleeves described above, the edges to be welded are the edge of a heat fusible and dimensionally heat stable strip overlapped on one end edge of a longitudinally shrinkable heat unstable sheet. As noted above, the free end of the strip extends a sufficient distance that when the two ends of the sheet are brought together and the end having the panel overlapped on the opposite end, the free end of the strip can be applied on the outer side of the underlap end. This product is useful as a wrap around sleeve. In the field, in applying the sleeve around a pipe or the like, the free end of the dimensionally heat stable strip is welded onto the outer side of the underlap end by direct heating applied thereon, for example with a propane flame or other torch flame, before being shrunk down onto the pipe or other article by application of heating in the normal manner.

The dimensionally heat unstable sheet material may typically have a shrink ratio of from about 1:1.05 to about 1:3.0, that is a shrinkage of about 5% to 67% based on the length of the unshrunk sheet.

The sheet material and strip are preferably organic polymeric materials, the same or different. For example, the material may be a polyolefin, a blend of polyolefins, or a blend of a polyolefin with an olefin copolymer, or with an elastomer, or with a mixture of these. Other polymeric materials which may be useful are elastomers such as butadiene-styrene copolymers, polybutadiene, silicone rubber, polybutene; plasticized polyvinylchloride, thermoplastic polyesters and polyurethane, ethylene propylene rubbers (EPDM) or blends of selected elastomers with polyolefins commonly referred to as thermoplastic elastomers. The most preferred polymeric materials are the polyolefins, e.g. polyethylenes, polypropylenes, various copolymers of ethylene and propylene, for example ethylene-ethylacrylate or ethylene-vinyl acetate copolymers in which repeat units derived from ethylene comonomer predominate (e.g. about 80% to 97%), and blends of such copolymers with polyethylene.

The dimensionally heat unstable sheet materials and the closure strips are preferably crosslinked polymeric material. In the case of, for example, a polyolefin dimensionally heat unstable sheet material, the material is preferably cross-linked to a degree of 25% to 85%, more preferably in the range 45% to 70%. In this connection, the degree of crosslinking of a given plastics material is definable by reference to solvent extraction tests conducted under standardized conditions on samples of the plastics. At zero crosslinking a solvent for the plastics will totally dissolve the plastics material, while a material which suffers no weight loss in such tests is regarded as 100% crosslinked. Intermediate degrees of crosslinking are indicated by proportionately intermediate percentage weight losses. The crosslinking can also be defined in terms of the tensile stress at 300% elongation and its ultimate elongation before failure, both measured at elevated temperature. Preferably the tensile at 300% elongation at 135°C is in the range about 10 to about 130 psi (7031 to 91399 Kg/m²) are preferably about 15 to about 110 psi (10546 to 77338 Kg/m²), and the ultimate elongation at 135°C is about 700% 1300% more preferably about 800% to about 1100%. The dimensionally substantially heat stable closure strip is preferably crosslinked to a degree somewhat higher than the dimensionally heat unstable material to which it is welded so that it will have good mechanical strength when hot during the procedure of shrinking down the wrap-around sleeve onto the pipe or other article during final use of the products.

Preferably, in order to provide a protective covering with good strength properties, the polymeric sheet materials and closure strips are of thickness about 0.015 to about 0.1 inches (about 0.4 mm to about 2.5 mm) more preferably about 0.025 to about 0.08 inches (about 0.6 to about 2 mm).

Advantageously, the inner side of the dimensionally heat unstable sheet material, that is, the side to be laid against the article to be protected, is lined with a functional coating. The coating may be, for example, a sealant, an adhesive material, a mastic, a grease, or a two-component curable composition. In the case in which the coating is an adhesive, this holds the sleeve more firmly on the article and reduces any tendency for the sleeve to become dislodged from the article. Mastics, when employed, can function both as an adhesive and as a sealant to effect a seal between the covering and the article. Examples of greases which may be employed include water-repellent greases such as silicone greases. These can be particularly useful when forming an insulating covering around telephone cables or electrical splices. Examples of two-component curable compositions which may be employed include heat-curable epoxy or urethane compositions which can form a corrosion-protective layer over the surface of a pipe to which the covering is applied.

Examples of suitable sealants include hot-melt adhesives. Hot-melt adhesives for this purpose are well known in the art. However, as will be apparent to those skilled in the art, many fluid materials, which may be organic or inorganic and which may or may not be crystalline at ambient temperature and are rendered substantially non-crystalline on heat application can be used as the sealant. The important requirement, where adhesive sealant is used, is that it should be capable of flowing during the further heating step so as to allow unrestrained recovery of the sheet, to fill any voids and to effect a seal between the surface of the article and the sleeve as the latter shrinks. One advantage of the preferred welding method described above is that since little or no heat is transferred through the sheet material to the side having the functional coating, the method avoids substantial deformation or flow of the functional coating during the welding procedure.

Various embodiments of the method of the present invention will now be described by way of example only with reference to the accompanying drawings in which:
Fig. 1 shows partially schematically and partially in perspective a welded wrap-around sleeve in accordance with the invention;
Figs. 2 and 3 are cross-sections illustrating a welding procedure and the welded product, respectively;
Fig. 4 is a partially schematic side view, partially in cross-section, illustrating a further welding method in accordance with the invention;
Fig. 5 is a plan view corresponding to Figure 4; and
Fig. 6 is a cross-section taken on the line VI-VI in Figure 5.

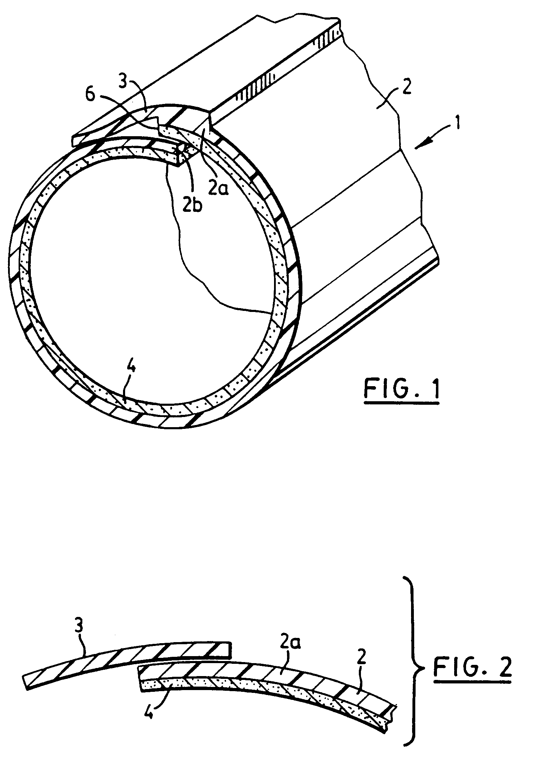

Referring to the drawings, wherein like numerals indicate like parts, Figure 1 shows a wrap-around sleeve 1 comprising a longitudinally heat shrinkable flexible polymeric sheet 2 having longitudinal end portions 2a and 2b. A substantially heat stable polymeric strip 3 is welded on the end portion 2a. The strip 3 is of sufficient width that when in use, the sleeve 1 is wrapped around an article to be protected (not shown), for example a pipe, with portions 2a overlapping on portion 2b, the free end of the strip 3 can be heated and/or pressed down onto the outer side of the sheet 2 and can be welded thereto by applying heat directly on the outer side of strip 3, using, for example, a propane torch or the like.

The inner side of the sheet 2 is coated with a functional coating 4.

In one preferred form, the strip 3 is clear or transparent. The underside of the strip 3 may be provided with a conventional temperature sensitive indicator, visible through the clear strip 3, which provides a visual indication of, for example, a colour change, when a temperature is reached at which the strip satisfactorily welds to the sheet 3. Usually, the coating 4 is softened by the heating subsequently applied to the sleeve 1 in the course of shrinking it down, and the hoop stress in the sleeve 1 causes the coating 4 to extrude to fill the channel or transition 6 between the end of the sheet 2 and the underside of the strip 3. Visual inspection of the coating 4 which fills the channel 6 provides the user with further visual assurance of the effectiveness of the seal provided by the shrunk-down sleeve.

In Figure 2, a closure strip 3 is applied on the end portion 2a and the assembly is fused together. For example it may be pressed together between platens the upper of which is internally heated by electrical resistance heating. Heat is transferred from the heated platen to the strip 3 and portion 2a which fuse together. A release film, for example of PTFE, may be used between the heated platen and the closure strip 3 so that the film and heated platen may be easily removed from the welded product after completion of the weld.

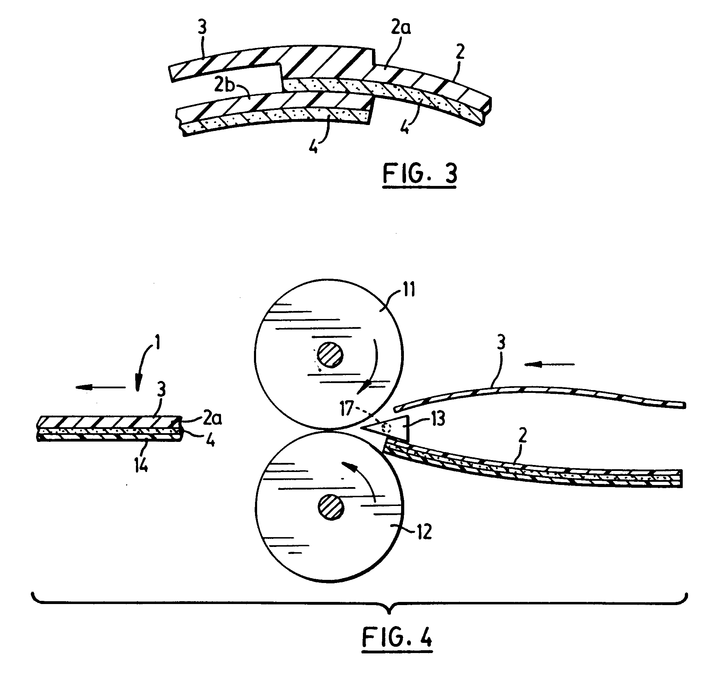

Figure 3 shows the end 2a bearing the fused on strip 3 overlapped on end 2b for welding thereto as described above with reference to Figure 1.

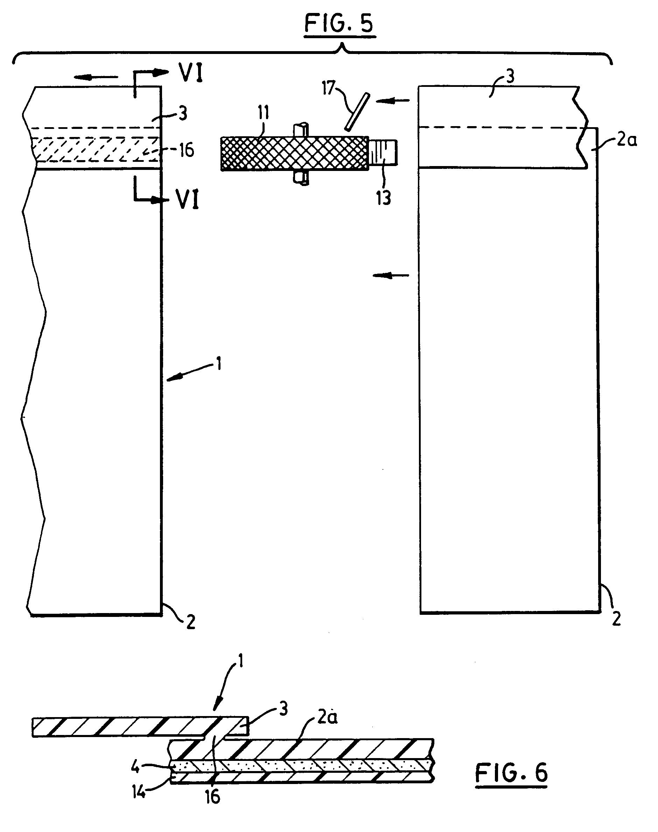

In Figures 4 and 5, there are shown the driven pressing or nip rollers 11 and 12 and heated wedge 13 of a heated wedge welding machine such as, for example, a machine of the kind available from Pfaff Industrie maschiner GmbH, Federal Republic of Germany.

The strip 3 and sheet 2 in superposed relationship are fed in from one side of the wedge 13. As the lower side of the strip 3 and the upper side of the sheet 2 pass over the surfaces of the wedge 3, thin surface skin portions thereof become melted dependent on the temperature of the wedge 13, which is closely controlled. The materials 2 and 3 are then engaged by the nip of the rolls 11 and 12 and are drawn through the rolls and are pressed together thereby so that the melted surface portions are fused together.

The welded wrap-around sleeve product is seen partially in mutually perpendicular cross sections in Figures 4 and 6. In this example, the functional coating 4 is covered with a release liner in the form of a self supporting strippable polymer film 14 which is removed before use of the sleeve.

As seen in Figures 5 and 6, the width of the zone 16 which is melted by the wedge 16 and fused between the rollers 11 and 12 may be narrower than the lateral extent of the overlap between the strip 3 and the end portion 2a.

The side of each of the rollers 11 and 12 may be milled as seen in Figure 5 to improve the grip on the strips and sheets drawn therethrough.

The strip 3 may be supplied to the welding apparatus in the form of a continuous strip from a roll thereof and may be severed or trimmed to the width of the sheets 2 by guillotine blades disposed upstream from the rollers 11 and 12.

A gas nozzle 17, inclining toward the axis of the wedge 13 and rollers 11 and 12 in the direction of movement of materials over the wedge 13, may be provided adjacent the rollers 11 and 12 and wedge 13 through which a gas which does not interfere with the welding method and materials, such as air, oxygen or nitrogen is flowed. As presently understood, it appears that a superior weld is achieved when the materials undergoing welding are bathed in a flow of gas during the steps of melting and fusion together.

Typically, in the manufacture of polymeric wrap-around sleeves, the wedge 13 will be maintained at a temperature of about 200 to about 350° C, preferably about 220 to about 320° C, and the surface drive speed of the rollers 11 and 12 will be in the range about 5 to about 50 ft./min. (1.5 to 15.2 m/min), preferably about 5 to about 45 ft./min (1.5 to 13.7 m/min). The gap between the rollers 11 and 12 will preferably be set such that when the materials to be welded pass through the nip of the rolls a laminating wheel back pressure of about 15 to about 45 psi (10546 to 31638 Kg/m²) preferably about 20 to about 35 psi (14061 to 24607 Kg/m²) is generated.

Although the above description provides ample information to enable one skilled in the art to conduct the present welding methods and to fabricate the welded products, for the avoidance of doubt some detailed examples of the methods in accordance with the invention will be given:

### Example 1

The procedure described above with reference to Figs. 2 and 3 was followed using the following materials and conditions.

### Heat Shrinkable Sheet

- Composition:: blend of 40% EVA⁽¹⁾ and 60% LDPE⁽²⁾
- Thickness:: 0.035 inch (0.889 mm) (stretched)
- Shrinkage on heating:: 23%
- Degree of crosslinking:: 61%

Notes:
(1) 12% vinylacetate and 88% ethylene-vinylacetate copolymer (melt index = 1)
(2) low density polyethylene (melt index = 2.0 specific gravity = 0.919)

### Functional coating

- Composition:: asphaltic mastic
- Thickness:: 1.5 mm

### Substantially Heat Stable Closure Strip

- Composition:: blend of 40% LDPE (as above) and 60% LLDPE (linear low density polyethylene MI = 2.3, sp. gr. = 0.917)
- Thickness:: 0.030 inches (0.762 mm)
- Width:: 3.0 inches (7.62 cm)
- Degree of crosslinking:: 75%

The exposed lower side of the functional coating is covered with a self supporting strippable polymer film. The assembly of the closure strip, heat shrinkable sheet, functional coating and strippable polymer film is placed between press platens. The platen in contact with the closure strip is heated by electrical heating elements. The assembly is compressed at 80 psi (56246 Kg/m²) between the platens. Current is applied to the upper platen to heat the closure strip and fuse it to the heat shrinkable sheet. After switching off the current, the platens are left closed for 10 to 20 seconds to allow internal coolant within the platens to cool the assembly before the platens were opened.

### Example 2

The procedure described above with reference to Figures 4 to 6 was followed using the following materials and conditions.

### Heat Shrinkable Sheet

- Composition:: blend of 60 % LDPE (melt flow index (mfi) = 2, specific gravity (sg) = 0.919) and 40% EVA (12% VA, mfi = 1, sg = 0.932), together with small amounts of additives such as colorant and antioxidant.
- Thickness:: 0.035 inch (0.889 mm)
- Shrinkage on heating:: 30%
- Crosslinking:: electron beam crosslinking characterized by 20 psi (14061 Kg/m²) tensile at 300% elongation and 990% ultimate elongation at 135°C.

### Functional Coating

- Adhesive:: 0.050 inches (0.132cm) thick on obverse of heat shrinkable sheet with release liner.

### Substantially Heat Stable Closure Strip

- Composition:: same as heat shrinkable sheet
- Thickness:: 0.028 inch (0.711 mm)
- Crosslinking:: electron beam crosslinking characterized by 90 psi (63276 Kg/m²) tensile at 300% elongation and 520% ultimate elongation at 135°C.

The welding was performed using a Pfaff model no. 8309-124 hot wedge welding machine equipped with a thermistor controlled heated wedge. The wedge temperature was maintained at 274°C, the drive speed of the nip rolls at 22 ft./min. (6.7m/min), and a gap of 0.107 inches (0.272cm) was set between the nip rolls. The back pressure between the nip rolls, as indicated by the gauge on the machine was 30 psi (21092Kg/m²). A flow of nitrogen gas was provided to bathe the area adjacent the wedge and nip rolls.

When subjected to peel strength testing DIN 30672 method 1, the weld had peel strength of 22 lb./in. (393Kg/m). The failure was cohesive, that is to say the strip and sheet did not peel apart but failed by elongation of the strip or of the sheet. The weld was homogeneous.

### Example 3

The procedure of Example 2 was repeated except for the following:

### Heat Shrinkable Sheet

- Composition:: blend of 40% LDPE (as in Example 2) and 60% LLDPE (linear low density polyethylene, mfi = 2.3 sg = 0.917) plus additives as in Example 2.
- Thickness:: 0.034 inch (0.864 mm)
- Shrinkage on heating:: 25%
- Crosslinking:: electron beam crosslinking characterized by 25 psi (17577 Kg/m²) tensile at 300% elongation and greater than 1080% ultimate elongation at 135°C.

### Functional coating

- Adhesive:: 0.066 inch (0.168cm) thick on obverse of backing with release liner.

### Substantially Heat Stable Closure Strip

- Composition:: same as heat shrinkable sheet of this Example
- Thickness:: 0.032 inches (0.813 mm)
- Crosslinking:: Electron beam crosslinking characterized by 90 psi (63276Kg/m²) tensile and 820% ultimate elongation at 135°C.

The welding was performed under the same wedge temperature and drive speed as Example 2. The gap between the rolls was set at 0.115 inch (0.292 cm) and the back pressure was 20 psi. The welding area was bathed with a flow of air.

The peel strength of the weld was 24 lb./in. (429Kg/m). The failure was cohesive (indicating a homogeneous weld) with elongation of the strip. The lap shear testing (ASTMID 1002) gave tensile failure of the backing and strip at greater than 42 psi (29529 Kg/m²).

### Example 4

The procedure of Example 2 was followed except for the following:

### Heat Shrinkable Sheet

- Composition:: LMDPE (linear medium density polyethylene, mfi = 2.5, sg = 0.935) plus additives as in Example 2.
- Thickness:: 0.024 inch (0.610 mm)
- Shrinkage on heating:: 25.9%
- Crosslinking:: Electron beam crosslinking to 85 psi (59761Kg/m²) tensile and 860% ultimate elongation at 135°C.

### Functional Coating

- Adhesive:: 0.064 inch (0.163 cm) thick on obverse of backing with release liner.

### Substantially Heat Stable Closure Strip

Same as Example 3.

The welding was performed at a wedge temperature of 232°C, drive speed 15 ft./min. (4.6c/min), gap was set at 0.110 in. (0.279cm) and the back pressure was 30 psi (210972Kg/m²). Oxygen gas was supplied to bathe the welding area.

The weld has a 5 lb/in (82 Kg/m) peel strength and failed adhesively (along the interface between the strip and sheet). The weld was not homogeneous but was uniform and would be adequate for some purposes. The weld had greater than 42 psi 29529Kg/m²) lap shear strength tensile failure of the sheet and strip.

### Example 5

The procedure of Example 2 was followed except:

### Heat Shrinkable Sheet

Same as Example 2.

### Functional Coating

- Adhesive:: 0.050 inches (0.127cm) thick on obverse of heat shrinkable sheet with release liner.

### Substantially Heat Stable Closure Strip

- Composition:: Same as Example 2
- Thickness:: Same as Example 2
- Crosslinking:: Electron beam crosslinking characterized by 45 psi (31638Kg/m²) tensile at 300% elongation and 740% ultimate elongation at 135°C.

The welding was performed with a wedge temperature of 315°C, drive speed of 8 ft./min. (2.4m/min), the gap was set at 0.107 inches, and the back pressure was 30 psi (21097Kg/m²). Oxygen gas was supplied to the welding area.

In peel strength testing the weld failed cohesively (greater than 24 lb./in. (429Kg/m) peel strength) and the weld exhibited greater than 30 psi (21092 Kg/m²) lap shear with tensile failure of the sheet and the strip.

## Claims

1. A heat shrinkable wrap-around sleeve adapted to be applied to an article in wrapping relation thereto comprising a sheet (2) of dimensionally heat unstable flexible material having spaced end portions (2a 2b) capable of being brought into overlapping relation when the sheet is applied to the article, the material having been stretched in one direction from an original heat stable form to a dimensionally heat unstable form capable of moving in the direction of its original form by the application of heat alone, and characterized by a substantially dimensionally heat stable closure strip (3) having one edge disposed on one of the end portions of said sheet and welded thereto through a uniform welded bond (16), said strip extending a direction generally transverse to said one direction, said strip (3) being of sufficient width that when the end portions (2a, 2b) of the sheet are brought together and the end portion having the closure strip (3) is overlapped on the opposite end portion, the free edge of the closure strip can be applied on the underlapping end portion and welded thereto by direct heating applied thereon.

2. A sleeve as claimed in claim 1, characterized in that said welded bond is homogeneous.

3. A sleeve as claimed in claim 1 or 2 characterized in that said sheet material 92) and said strip (3) each 0.015 to 0.1 inches thick (0.381 - 2.54 mm) preferably 0.025 to 0.08 inches 90.635 to 2.032 mm) thick.

4. A sleeve as claimed in any preceding claim characterized in that said sheet material (2) and strip (3) each comprise a polyolefin, a blend of polyolefins, a blend of a polyolefin with an olefin copolymer or with an elastomer or with a mixture thereof, an elastomer, a thermoplastic elastomer, or a mixture thereof.

5. A sleeve as claimed in any preceding claim characterized in that said sheet material (2) is crosslinked to a degree of 25% to 85%, preferably 45% to 85%, and said strip (3) to a degree higher than said sheet material.

6. A sleeve as claimed in any preceding claim characterized in that said sheet material (2) is crosslinked so that at 135°C the tensile stress required for 300% elongation is 10 to 130 psi (7031 to 91399Kg/m²), preferably 15 to 100 psi (10546 to 77338Kg/m²) and its ultimate elongation is 700-1300%, preferably, 800-1100% and the strip (3) is crosslinked to a degree higher than the sheet material.

7. A sleeve as claimed in any preceding claim characterized in that said sheet material (2) has a functional coating (4) on its inner side, preferably a sealant or an adhesive material.

8. A sleeve as claimed in any preceding claim characterized in that said strip (3)is transparent and has a temperature sensitive visual indicator on the underside of and visible through said transparent strip.

9. A sleeve as claimed in claim 1, wherein the strip (3) is of uniform composition throughout and is free from reinforcement.

## Patentansprüche

1. Wärmeschrumpfbare Schutzhülle, die zum Herumlegen um einen Gegenstand in diesen umgebender Weise ausgelegt ist, mit einem Flächenkörper (2) aus dimensionsmäßig wärmeinstabilem flexiblen Material mit voneinander beabstandeten Endbereichen (2a, 2b), die bei Anbringung des Flächenkörpers an dem Gegenstand in einander überlappende Beziehung bringbar sind, wobei das Material von einer ursprünglichen wärmestabilen Form in die dimensionsmäßig wärmeinstabile Form in einer Richtung gereckt worden ist und zur Ausführung einer Bewegung in Richtung seiner ursprünglichen Form durch die bloße Aufbringung von Wärme ausgelegt ist,
gekennzeichnet durch
einen im wesentlichen dimensionsmäßig wärmestabilen Verschlußstreifen (3), der mit seinem einen Rand auf einem der Endbereiche des Flächenkörpers (2) angeordnet ist und mit diesem durch eine gleichmäßige Schweißverbindung (16) verschweißt ist, wobei sich der Verschlußstreifen (3) in einer zu der genannten einen Richtung allgemein quer verlaufenden Richtung erstreckt, wobei der Verschlußstreifen (3) eine ausreichende Breite besitzt, damit dann, wenn die Endbereiche (2a, 2b) des Flächenkörpers zusammengebracht sind und der den Verschlußstreifen (3) aufweisende Endbereich auf dem gegenüberliegenden Endbereich überlappend angeordnet ist, der freie Rand des Verschlußstreifens (3) auf dem darunterliegenden Endbereich angebracht und mit diesem durch die direkte Aufbringung von Wärme verschweißt werden kann.

2. Schutzhülle nach Anspruch 1,
dadurch gekennzeichnet,
daß die Schweißverbindung homogen ist.

3. Schutzhülle nach Anspruch 1 oder 2,
dadurch gekennzeichnet,
daß das Flächenkörpermaterial (2) und der Streifen (3) jeweils eine Dicke von 0,015 bis 0,1 Inch (0,381 - 2,54 mm), vorzugsweise eine Dicke von 0,025 bis 0,08 Inch (0,635 bis 2,032 mm), aufweisen.

4. Schutzhülle nach einem der vorausgehenden Ansprüche,
dadurch gekennzeichnet,
daß das Flächenkörpermaterial (2) und der Streifen (3) jeweils ein Polyolefin, eine Mischung aus Polyolefinen, eine Mischung aus einem Polyolefin mit einem Olefincopolymer oder mit einem Elastomer oder mit einer Mischung daraus, einen Elastomer, einen thermoplastischen Elastomer oder eine Mischung daraus aufweisen.

5. Schutzhülle nach einem der vorausgehenden Ansprüche,
dadurch gekennzeichnet,
daß das Flächenkörpermaterial (2) in einem Ausmaß von 25 % bis 85 %, vorzugsweise 45 % bis 85%, quervernetzt ist und der Streifen (3) in einem stärkeren Ausmaß als das Flächenkörpermaterial (2) quervernetzt ist.

6. Schutzhülle nach einem der vorausgehenden Ansprüche,
dadurch gekennzeichnet,
daß das Flächenkörpermaterial (2) derart quervernetzt ist, daß bei 135° C die für eine Längung von 300 % erforderliche Zugspannung 10 bis 130 psi (7031 bis 91399 kg/m²), vorzugsweise 15 bis 100 psi (10546 bis 77338 kg/m²), und seine letztendliche Längung 700 bis 1300 %, vorzugsweise 800 bis 1100 %, beträgt, und daß der Streifen (3) in einem stärkeren Ausmaß als das Flächenkörpermaterial (2) quervernetzt ist.

7. Schutzhülle nach einem der vorausgehenden Ansprüche,
dadurch gekennzeichnet,
daß das Flächenkörpermaterial (2) auf seiner Innenseite eine Funktionsbeschichtung, vorzugsweise ein Dichtungsmittel oder ein Klebstoffmaterial, aufweist.

8. Schutzhülle nach einem der vorausgehenden Ansprüche,
dadurch gekennzeichnet,
daß der Verschlußstreifen (3) transparent ist und einen temperaturempfindlichen visuellen Indikator aufweist, der sich auf der Unterseite des transparenten Verschlußstreifens befindet und durch diesen hindurch sichtbar ist.

9. Schutzhülle nach Anspruch 1,
wobei der Verschlußstreifen (3) durchweg eine gleichmäßige Zusammensetzung aufweist und frei von Verstärkungen ist.

## Revendications

1. Manchon enroulé thermorétractable, adapté pour être appliqué sur un article en relation d'enroulement avec ce dernier, comprenant une feuille (2) en matériau souple dimensionnellement instable à la chaleur, ayant des parties d'extrémité (2a, 2b) espacées capables d'être amenées superposées lorsque la feuille est appliquée sur l'article, le matériau ayant été étiré dans une direction depuis une forme d'origine stable à la chaleur, pour donner une forme dimensionnellement instable à la chaleur, capable de se déformer dans la direction de sa forme d'origine par l'application de chaleur seulement, et caractérisé par une bande de fermeture (3) sensiblement stable dimensionnellement à la chaleur, ayant un bord disposé sur l'une des parties d'extrémité de ladite feuille et soudé à cette dernière par une liaison soudée (16) uniforme, ladite bande s'étendant dans une direction globalement transversale à ladite direction, ladite bande (3) ayant une largeur suffisante pour que, lorsque les parties d'extrémité (2a, 2b) de la feuille sont amenées en contact et que la partie d'extrémité ayant la bande de fermeture (3) est superposée sur la partie d'extrémité opposée, le bord libre de la bande de fermeture puisse être appliqué sur la partie d'extrémité recouverte et soudé à cette dernière par l'application directe d'un chauffage dessus.

2. Manchon selon la revendication 1, caractérisé en ce que ladite liaison soudée est homogène.

3. Manchon selon la revendication 1 ou 2, caractérisé en ce que ledit matériau en feuille (92) et ladite bande (3) ont chacun une épaisseur allant de (0,381 à 2,54 mm) (0,015 à 0,1 pouce), de préférence de (90,635 à 2,032 mm) (0,025 à 0,08 pouce).

4. Manchon selon l'une quelconque des revendications précédentes, caractérisé en ce que ledit matériau en feuille (2) et la bande (3) comprennent chacun une polyoléfine, un mélange de polyoléfines, un mélange d'une polyoléfine avec un copolymère oléfine ou avec un élastomère ou un mélange de ces derniers, un élastomère, un élastomère thermoplastique ou un mélange de ces derniers.

5. Manchon selon l'une quelconque des revendications précédentes, caractérisé en ce que ledit matériau en feuille (2) est réticulé à un degré allant de 25 % à 85 %, de préférence de 45 % à 85 %, et ladite bande (3) est réticulée à un degré supérieur audit matériau en feuille.

6. Manchon selon l'une quelconque des revendications précédentes, caractérisé en ce que ledit matériau en feuille (2) est réticulé de manière que, à la température de 135°C, la contrainte en tension nécessaire pour un étirement de 300 % ait une valeur allant de (7031 à 91399 kg/m²) (10 à 130 psi), de préférence de (10546 à 77338 kg/m²) (15 à 100 psi) et que son étirement ultime ait une valeur allant de (700 à 1300 %), de préférence 800 à 1100 %, et la bande (3) est réticulée à un degré supérieur au matériau en feuille.

7. Manchon selon l'une quelconque des revendications précédentes, caractérisé en ce que ledit matériau en feuille (2) a un revêtement fonctionnel (4) sur sa face intérieure, de préférence un isolant ou un matériau adhésif.

8. Manchon selon l'une quelconque des revendications précédentes, caractérisé en ce que ladite bande (3) est transparente et a un indicateur visuel sensible à la température sur la face inférieure de la dite bande transparente et visible à travers celle-ci.

9. Manchon selon la revendication 1, dans lequel la bande (3) a une composition entièrement uniforme et est dépourvue de renforcement.
